# EUROPÄISCHE PATENTSCHRIFT

(11) **EP 3 152 048 B1**
(45) Veröffentlichungstag und Bekanntmachung des Hinweises auf die Patenterteilung: **06.02.2019**
(21) Anmeldenummer: 15732553.1
(22) Anmeldetag: 08.06.2015
(51) Int. Cl.: B32B 11/04, B32B 15/04, B32B 27/06, B32B 29/00, B32B 5/18, B32B 7/12, B32B 27/20, B32B 27/30, B32B 27/32, B32B 27/34, B32B 37/12, G10K 11/168, B32B 38/00

(54) **VORRICHTUNG UND VERFAHREN ZUR ENTDRÖHNUNG EINES BAUTEILS**
DEVICE AND METHOD FOR DEADEN THE SOUND OF A COMPONENT
DISPOSITIF ET PROCÉDÉ D'INSONORISATION D'UN COMPOSANT

(30) Priorität: 06.06.2014 DE 102014210910
(43) Veröffentlichungstag der Anmeldung: 12.04.2017
(73) Patentinhaber: Faist ChemTec GmbH, 67547 Worms (DE)
(72) Erfinder: VIDOVIC, Rudolf, 67227 Frankenthal (DE); HARDT, Christian, 65451 Kelsterbach (DE); LIEUTENANT, Bernd, 54314 Baldringen (DE); OSTER, Joachim, 65527 Niedernhausen (DE); GRAF, Torsten, 67599 Gundheim (DE); BECKER, Jean Georges, 67551 Worms (DE)
(74) Vertreter: Sika Patent Attorneys
(86) Internationale Anmeldenummer: PCT/EP2015/062728
(87) Internationale Veröffentlichungsnummer: WO 2015/185757

(56) Entgegenhaltungen:
- WO-A1-2014/053179

## Beschreibung

Die Erfindung betrifft eine Vorrichtung sowie ein Verfahren zur Entdröhnung eines Bauteils, insbesondere eines schwingenden oder schwingfähigen Bauteils.

Zur Körperschalldämpfung von schwingfähigen Bauteilen, kurz Entdröhnung, sind Entdröhnungsbeläge in vielfältigen Ausführungsformen bekannt. Die Entdröhnungsbeläge werden fest mit dem zu entdröhnenden Bauteil verbunden und reduzieren durch ihre Eigenschaften die Eigenschwingungen des Bauteils. Zum einen sind einschichtige Entdröhnungsbeläge, insbesondere Schwerfolien aus Bitumen, bekannt. Zum anderen ist es bekannt, dass Verbundsysteme, die aus einer elastischen Dämpfungsschicht und einer meist relativ dünnen, steifen Abdeckung bestehen, eine gute Entdröhnungswirkung erzielen. Die elastische Dämpfungsschicht kann dabei als Schaumschicht, insbesondere auf Bitumenbasis, ausgeführt sein. Eine Schaumschicht bietet neben wirkungsvollen Dämpfungseigenschaften auch eine gute thermische Isolierung, so dass ein solches Verbundsystem gleichsam zu akustischen Zwecken und zur thermischen Isolierung des Bauteils eingesetzt werden kann. Einsatzgebiete solcher Verbundsysteme sind insbesondere Bleche von Kraftfahrzeugen oder Gehäuse von Haushaltsgeräten (weiße Ware).

Die WO 2014 053 179 A1 kennt beispielsweise eine schalldämpfende Sandwichplatte mit einer ersten Schicht zur Schalldämpfung und/oder Schalldämmung und einer zweiten Schicht zur Entdröhnung und/oder thermischen Isolierung, die an ihrer ersten Hauptseite mit der ersten Schicht fest verbunden ist und mit ihrer zweiten Hauptseite zur Verbindung mit einem akustisch zu verbessernden Bauteil bestimmt ist.

Die US 6 110 985 A kennt weiterhin eine Schichtdämpfungsstruktur mit einer zu dämpfenden Platte, einer Beschränkungsschicht und einer Schicht aus Schaumvibrationsdämpfungsmaterial, die dazwischen angeordnet ist.

Für eine wirksame Entdröhnung des Bauteils, insbesondere Blechs, ist eine feste und möglichst vollflächige Verbindung der Entdröhnbeschichtung mit dem Bauteil erforderlich. Bekannte Entdröhnvorrichtungen werden entweder mechanisch, beispielsweise mit Klemm- oder Schraubelementen, oder mittels einer auf die Dämpfungsschicht aufgebrachten Klebstoffschicht (Heißschmelzkleber) mit dem Bauteil verbunden. Der Auftrag des Klebers auf die Schaumschicht ist jedoch technisch aufwendig und kostenintensiv. Darüber hinaus kann die Verwendung eines heißsiegelfähigen Klebers problematisch sein, da er die Schaumschicht thermisch schädigen kann. Sofern eine Bitumenschicht als Dämpfungsschicht verwendet wird, ist es auch grundsätzlich auch möglich, das klebrige Bitumen direkt auf das akustisch zu verbessernde Bauteil zu applizieren. Allerdings erfüllt eine solche Verbindung nicht die Anforderungen an die Kälteschlagzähigkeit und gewährleistet keinen dauerhaften Verbund des Belages mit dem Blechsubstrat.

Der Erfindung liegt die Aufgabe zugrunde, eine Vorrichtung und ein Verfahren zur Entdröhnung eines Bauteils anzugeben, welche eine besonders wirksame und kostengünstige Entdröhnung ermöglichen.

Die Aufgabe wird erfindungsgemäß gelöst durch eine Vorrichtung mit den Merkmalen des Anspruchs 1 sowie ein Verfahren mit den Merkmalen des Anspruchs 9. Bevorzugte Ausgestaltungen der Erfindung sind in den abhängigen Ansprüchen sowie der nachfolgenden Beschreibung und den beiliegenden Figuren angegeben.

Die erfindungsgemäße Vorrichtung umfasst eine Dämpfungsschicht aus einem geschäumten Material und eine mit der Dämpfungsschicht fest verbundene Versteifungsschicht, welche steifer ist als die Dämpfungsschicht. Dabei ist die Dämpfungsschicht durch einen geschäumten Schmelzkleber gebildet.

Das erfindungsgemäße Verfahren zur Entdröhnung eines Bauteils umfasst die Schritte:
- Anbringen einer Vorrichtung, welche eine Versteifungsschicht und eine mit der Versteifungsschicht verbundene Dämpfungsschicht aus einem geschäumten Schmelzkleber aufweist, an dem zu entdröhnenden Bauteil und
- Herstellen einer festen Verbindung der Dämpfungsschicht mit dem Bauteil durch Erwärmen und anschließendes Abkühlen zumindest der Dämpfungsschicht der Vorrichtung.

Ein Grundgedanke der Erfindung kann darin gesehen werden, bei einem mehrschichtigen Verbundsystem zur Körperschalldämpfung (Entdröhnung) die insbesondere zur Schallabsorption vorgesehene Dämpfungsschicht oder Schaumschicht aus einem geschäumten Schmelzkleber herzustellen. Die aus einem geschäumten Schmelzkleber bestehende Schicht vereint somit die schalldämpfenden Eigenschaften der Dämpfungsvorrichtung mit den Eigenschaften eines Klebstoffsystems in einer einzigen Schicht. Darüber hinaus kann die Dämpfungsschicht aufgrund ihr Porosität bzw. der in der Dämpfungsschicht ausgebildeten Hohlräume auch zur thermischen Isolierung dienen. Die mit der Dämpfungsschicht verbundene Versteifungsschicht trägt ebenfalls zu den schalldämpfenden Eigenschaften bei, da sie zusammen mit der Dämpfungsschicht ein Feder-Masse-System bildet, das eine besonders wirksame Körperschalldämpfung bewirkt. Darüber hinaus kann die dichtere und steifere Abdeckung auch die Schalldämmung verbessern. Aufgrund der Einsparung einer zusätzlichen Kleberschicht können bei gleichen akustischen Eigenschaften im Vergleich zu bekannten Verbundsystemen Gewicht und Kosten reduziert werden. Die heißsiegelfähige Schaumschicht gewährleistet einen dauerhaften Verbund des Entdröhnbelags mit dem zu entdröhnenden Bauteil. Die körperschalldämpfende Vorrichtung bzw. der Entdröhnbelag kann auch als Entdröhnbeschichtung oder körperschalldämpfendes Verbundbauteil bezeichnet werden.

Unter einem Schaum wird insbesondere ein Gebilde aus Poren verstanden, welche durch Stege begrenzt werden und ein zusammenhängendes Gebilde bilden. Die Poren oder Hohlräume sind vorzugsweise mit Luft gefüllt und können offene Poren oder geschlossene Poren sein.

Die Versteifungsschicht weist insbesondere eine größere Dehnsteifigkeit auf als die Dämpfungsschicht und kann auch als dehnsteife Abdeckung bezeichnet werden. Vorzugsweise weist die Versteifungsschicht ein E-Modul auf, welches mindestens um den Faktor 5, vorzugsweise mindestens um den Faktor 10 größer ist als das E-Modul der Dämpfungsschicht.

In der Anwendung an dem zu entdröhnenden Bauteil ist die Versteifungsschicht auf der dem Bauteil abgewandten Seite der Dämpfungsschicht angeordnet und bildet insbesondere eine außenliegende oder äußere Schicht der Vorrichtung bzw. des Verbundbauteils. Die Dämpfungsschicht bildet die gegenüberliegende, zweite außenseitige oder äußere Schicht des Verbundbauteils und ist zur direkten Verbindung mit dem zu entdröhnenden Bauteil vorgesehen. Bei der erfindungsgemäßen Entdröhnvorrichtung handelt es sich insbesondere um ein zweischichtiges Verbundbauteil, bestehend aus einer Dämpfungsschicht, welche eine geschäumte Schmelzkleberschicht ist, und einer mit dieser insbesondere stoffschlüssig verbundenen Versteifungsschicht. Die Versteifungsschicht und das zu entdröhnende Blech bildet mit der dazwischen liegenden Dämpfungsschicht ein "Sandwich", das eine erheblich reduzierte Neigung zum Schwingen aufweist und somit eine effiziente Entdröhnung bewirkt. Die erfindungsgemäße Vorrichtung kann auch als Sandwich oder Sandwichbelag bezeichnet werden.

Schmelzklebstoffe, auch Heißschmelzkleber genannt, sind dem Fachmann grundsätzlich bekannt. Es handelt sich hierbei um Klebstoffe, deren Viskosität beim Erwärmen sinkt und die beim Abkühlen eine stoffschlüssige Verbindung mit dem angrenzenden Material bilden. Schmelzklebstoffe sind in der Regel lösungsmittelfrei und bei Raumtemperatur fest. Erfindungsgemäß wurde erkannt, dass ein geschäumter Schmelzklebstoff als Dämpfungsschicht innerhalb eines Verbundbauteils zu guten körperschalldämpfenden Eigenschaften des Verbundbauteils führt, wobei sich gleichzeitig eine Klebstofffunktion in die Dämpfungsschicht integrieren lässt. Der geschäumte Heißschmelzkleber bzw. Schmelzkleber kann ein polymerer Schmelzkleber sein, welcher insbesondere zumindest ein thermoplastisches Polymer enthält. Die aus einem geschäumten Schmelzkleber bestehende Dämpfungsschicht kann auch als geschäumtes Hotmelt-System oder Polymersystem bezeichnet werden. Die Dämpfungsschicht kann einen heißsiegelfähigen Polymerschaum umfassen.

Zur Befestigung der Entdröhnungsvorrichtung an dem zu entdröhnenden Bauteil, insbesondere Blech, ist vorgesehen, dass das vorgefertigte Verbundbauteil, gegebenenfalls zusammen mit dem zu entdröhnenden Bauteil, zumindest bereichsweise, erwärmt wird. Insbesondere wird die Dämpfungsschicht erwärmt. Vorzugsweise legt sich die Dämpfungsschicht bei der Erwärmung vollflächig an das Bauteil an, wobei aufgrund der herabgesetzten Viskosität auch eine Anpassung an die Oberfläche des Bauteils erfolgen kann. Die erwärmte Dämpfungsschicht formt sich unebenen Flächen an. Auf diese Weise können beispielsweise auch Unebenheiten in dem Bauteil ausgefüllt bzw. ausgeglichen werden. Anschließend wird die Dämpfungsschicht, gegebenenfalls zusammen mit dem Bauteil, abgekühlt, wodurch eine feste, insbesondere stoffschlüssige Verbindung der Dämpfungsschicht mit dem Bauteil hergestellt wird. Das Schäumen der Dämpfungsschicht erfolgt vorzugsweise vor der Erwärmung zum Zweck der Verklebung mit dem zu entdröhnenden Bauteil. Mit anderen Worten wird die bereits geschäumte Dämpfungsschicht erwärmt, um diese mit dem Bauteil stoffschlüssig zu verbinden. Insbesondere wird die Entdröhnvorrichtung, welche die bereits geschäumte Dämpfungsschicht aufweist, an das Bauteil angelegt und durch Erwärmung mit diesem verbunden. Es sei angemerkt, dass unter dem Begriff "Verbindung" im Rahmen der vorliegenden Erfindung insbesondere eine haftende Verbindung verstanden wird.

Die heißsiegelfähige Dämpfungsschicht kann einen Polymerschaum aufweisen oder aus diesem bestehen. Zur Herstellung der geschäumten Schmelzkleberschicht kann in einer dem Fachmann grundsätzlich bekannten Weise eine Polymermatrix geschäumt werden, insbesondere durch ein chemisches und/oder physikalisches Treibmittel oder durch Einblasen von Gas. Insbesondere können expandierbare Hohlkörper eingesetzt werden, die durch Temperaturerhöhung ein Aufschäumen bewirken. Der Schaumkörper wird anschließend kalandriert und es wird die Versteifungsschicht aufkaschiert. Die Entdröhnvorrichtung ist bei Raumtemperatur vorzugsweise nicht-klebend und kann daher unkompliziert verpackt und befördert werden. Erst durch Temperaturerhöhung vor Ort, vorzugsweise unmittelbar vor dem Aufbringen auf das Bauteil oder bereits am Bauteil, wird der Schmelzklebstoff aktiviert. Dabei wird die Dämpfungsschicht klebrig, insbesondere auf ihrer der Versteifungsschicht abgewandten Seite. Um insbesondere auf dieser Seite die Klebewirkung hervorzurufen, kann es vorteilhaft sein, die Erwärmung gezielt an der der Versteifungsschicht abgewandten Seite zu bewirken, beispielsweise durch eine Erwärmung des zu entdröhnenden Bauteils und eine Wärmeübertragung von dem Bauteil auf die Dämpfungsschicht.

Besonders gute akustische, aber auch thermische Eigenschaften lassen sich dadurch erzielen, dass die Dämpfungsschicht bzw. die Schmelzkleberschicht eine größere Dicke aufweist als die Versteifungsschicht. In einer besonders bevorzugten Ausführungsform weist die Dämpfungsschicht bzw. Schaumschicht eine Dicke von 0,5 mm bis 5 mm auf. Unter der Dicke wird hierbei insbesondere die Erstreckung quer zur flächigen Erstreckung der plattenförmigen Vorrichtung bzw. quer zur Oberfläche des zu entdröhnenden Bauteils verstanden. Die Versteifungsschicht weist vorzugsweise eine Stärke bzw. Dicke im Bereich zwischen 0,05 mm und 0,3 mm auf. Insbesondere bei nichtmetallischen Versteifungsschichten können jedoch auch größere Schichtdicken, insbesondere bis zu 0,5 mm oder bis zu 1 mm, zur Anwendung kommen.

Vorzugsweise bilden die Dämpfungsschicht und die Versteifungsschicht gemeinsam den überwiegenden Anteil der erfindungsgemäßen Vorrichtung, insbesondere mindestens 90%, mindestens 95% oder mindestens 98% der Dicke der Vorrichtung bzw. Entdröhnplatte. Besonders bevorzugt besteht die Vorrichtung aus Dämpfungsschicht und Versteifungsschicht.

Die Dämpfungsschicht mit ihrer integrierten Schmelzkleberfunktion ist erfindungsgemäß zur direkten Verbindung mit dem zu entdröhnenden Bauteil bestimmt. Auf diese Weise lässt sich die Entdröhnplatte oder- folie ohne zusätzliche Klebstoffschicht auf das zu entdröhnende Bauteil applizieren. Darüber hinaus ist vorzugsweise auch zwischen der Dämpfungsschicht und der Versteifungsschicht keine weitere Klebstoffschicht vorgesehen. Die Versteifungsschicht ist also direkt angrenzend an die Dämpfungsschicht angeordnet, so dass sich diese beiden Schichten des Verbundbauteils berühren. Dämpfungsschicht und Versteifungsschicht sind fest, vorzugsweise stoffschlüssig, miteinander verbunden.

Der geschäumte Schmelzkleber, also die Dämpfungsschicht, wird erfindungsgemäß durch eine Temperaturerhöhung aktiviert, so dass eine klebende Oberfläche zur Befestigung der Vorrichtung an dem zu entdröhnenden Bauteil erzeugt wird. Die geschäumte Schmelzkleberschicht ist somit durch Erwärmung und anschließende Abkühlung mit dem Bauteil verbindbar bzw. an diesem befestigbar. Durch das Abkühlen erfolgt eine stoffschlüssige Verbindung zwischen der Dämpfungsschicht und dem Bauteil.
Grundsätzlich können beliebige geschäumte Schmelzkleber zum Einsatz kommen. Besonders bevorzugt ist eine Dämpfungsschicht, welche Ethylenvinylacetat (EVA) enthält oder aus Ethylenvinylacetat besteht. Erfindungsgemäß enthält die geschäumte Dämpfungsschicht Polyamid und/oder Butylkautschuk und/oder Styrol-Butadien-Blockcopolymere (SBS). Die genannten Stoffe bilden dabei den überwiegenden Anteil der Dämpfungsschicht, erfindungsgemäß mindestens 50 Gew.-%, bevorzugt 70 Gew.-% oder 90 Gew.-%.
Die Dämpfungsschicht bzw. Schaumschicht weist vorzugsweise eine Dichte von 0,1 kg/dm³ bis 1 kg/dm³, insbesondere 0,18 kg/dm³ bis 0,5 kg/dm³ auf.
Die Versteifungsschicht kann beispielsweise eine Metallfolie und/oder eine Kunststoffschicht und/oder Pappe und/oder eine Bitumenschicht, vorzugsweise mit einer äußeren Abdeckschicht, aufweisen. Als Metallfolie kommt aus Gewichtsgründen insbesondere Aluminium, aber auch Stahl in Betracht. Die Kunststoffschicht kann beispielsweise eine glasfaserverstärkte Kunststoffschicht, insbesondere aus Polypropylen (PP) und/oder Polyamid (PA) sein. Bei einer Bitumendeckschicht ist vorzugsweise eine Versiegelung oder Versiegelungsschicht vorgesehen, um eine verklebungsfreie Oberfläche zu erhalten. Durch die Bitumenschicht wird eine gut formbare Entdröhnbeschichtung erreicht, die sich auch für Bauteile mit Oberflächenstrukturen, insbesondere Vertiefungen und Erhebungen, eignet.

Die Erfindung bezieht sich auch auf ein Verbundsystem, oder Sandwichsystem, bestehend aus oder aufweisend ein zu entdröhnendes Bauteil, insbesondere Blech, und eine erfindungsgemäße Vorrichtung, die mit dem zu entdröhnenden Bauteil fest verbindbar oder verbunden ist.

Die Erfindung wird nachfolgend anhand beispielhafter Ausführungsformen, welche in den beiliegenden, schematischen Zeichnungen dargestellt sind, weiter beschrieben. Es zeigen:
- Fig. 1: eine erste Ausführungsform einer erfindungsgemäßen Vorrichtung und
- Fig. 2: eine zweite Ausführungsform einer erfindungsgemäßen Vorrichtung.

Gleiche oder gleich wirkende Komponenten sind in sämtlichen Figuren mit denselben Bezugszeichen gekennzeichnet.

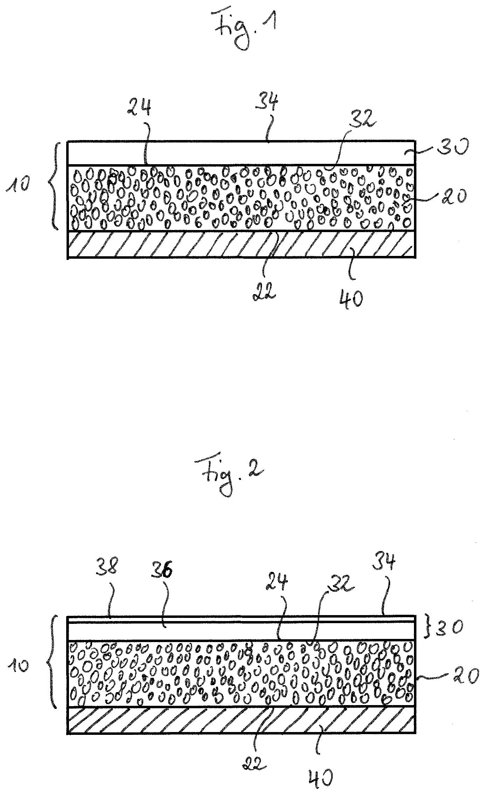

Fig. 1 zeigt schematisch im Querschnitt eine erste Ausführungsform einer erfindungsgemäßen, schalldämpfenden Vorrichtung 10, welche auch schalldämmend wirken kann. Die Vorrichtung 10 ist für eine feste, insbesondere stoffschlüssige Verbindung mit einem Bauteil 40, insbesondere einem Blech, vorgesehen und kann auch als Dämpfungsfolie, Dämpfungsplatte oder Dämpfungsbeschichtung bezeichnet werden. Die Vorrichtung 10 ist ein Verbundbauteil und umfasst eine poröse, mit Hohlräumen versehene erste Schicht, die als Dämpfungsschicht 20 bezeichnet wird. Die Dämpfungsschicht 20 kann darüber hinaus auch als thermisch isolierende Schicht dienen. Die Dämpfungsschicht 20 besteht aus einem geschäumten Schmelzkleber und ist eingerichtet, mit dem akustisch zu verbessernden bzw. zu entdröhnenden Bauteil 40 fest, insbesondere stoffschlüssig, verbunden zu werden. Eine erste äußere Seite 22 der Dämpfungsschicht 20 wird hierbei mit dem Bauteil 40 haftend, insbesondere stoffschlüssig, verbunden.

An der dem Bauteil 40 gegenüberliegenden zweiten Seite 24 der Dämpfungsschicht 20 eine Versteifungsschicht 30 angeordnet, die unmittelbar mit der Dämpfungsschicht 20 verbunden ist. Die Versteifungsschicht 30 bildet eine dehnsteife Abdeckung der Sandwichplatte bzw. Vorrichtung 10 und umfasst eine erste Seite 32, die mit der geschäumten Schmelzkleberschicht verbunden ist, und eine zweite, außen liegende Seite 34. Die Versteifungsschicht 30 kann beispielsweise eine Metallschicht oder eine insbesondere glasfaserverstärkte Kunststoffschicht sein. Die Versteifungsschicht 30 hat ein größeres Flächengewicht und eine geringere Dicke als die Dämpfungsschicht 20. Die Dämpfungsschicht 20 ist elastisch, so dass sie Vibrationen des Bauteils aufnehmen und in Wärme umwandeln kann, um eine Entdröhnung des Bauteils 40 zu bewirken, wobei die Entdröhnungswirkung durch die mit der Dämpfungsschicht 20 verbundene Versteifungsschicht 30 weiter verstärkt wird. Insgesamt handelt es sich bei dem erfindungsgemäßen Bauteil somit um ein Verbundbauteil, welches eine Dämpfungsschicht 20 und eine außenseitige, steife Abdeck- oder Versteifungsschicht 30 aufweist.

Die in Fig. 2 dargestellte Vorrichtung 10 entspricht im Wesentlichen der Vorrichtung 10 gemäß Fig. 1. Im Unterschied hierzu ist als Versteifungsschicht 30 eine Bitumenschicht 36 vorgesehen, die mit einer Versiegelungs- oder Abdeckschicht 38 abgedeckt ist. Auf diese Weise wird eine einsickfähige Entdröhnvorrichtung für unebene (verformte) Untergründe bereitgestellt, z.B. für weiße Ware oder den Automobilbereich. Bei der Bitumenschicht 36 kann es sich um eine Bitumenschwerfolie handeln.

Dadurch, dass die Dämpfungsschicht 20 als geschäumte Schmelzkleberschicht ausgebildet ist, lässt sich diese ohne zusätzliche Klebeschichten sowohl mit der Versteifungsschicht 30 als auch mit dem Bauteil 40 verbinden bzw. verkleben. Gleichzeitig wird durch ihre Elastizität und die gebildeten Hohlräume eine hervorragende akustische Wirksamkeit erzielt.

### Bezugszeichenliste

- 10: Vorrichtung
- 20: Dämpfungsschicht
- 22: erste Seite
- 24: zweite Seite
- 30: Versteifungsschicht
- 32: erste Seite
- 34: zweite Seite
- 36: Bitumenschicht
- 38: Abdeckschicht
- 40: Bauteil

## Patentansprüche

1. Vorrichtung (10) zur Entdröhnung eines Bauteils (40), aufweisend
- eine Dämpfungsschicht (20) aus einem geschäumten Material und
- eine mit der Dämpfungsschicht (20) fest verbundene Versteifungsschicht (30), welche steifer ist als die Dämpfungsschicht (20), wobei die Dämpfungsschicht (20) durch einen geschäumten Schmelzkleber gebildet ist,
die Dämpfungsschicht (20) zur direkten Verbindung mit dem zu entdröhnenden Bauteil (40) bestimmt ist, wobei der geschäumte Schmelzkleber durch eine Temperaturerhöhung aktivierbar ist, so dass eine klebende Oberfläche zur Befestigung der Vorrichtung (10) an dem zu entdröhnenden Bauteil (40) erzeugt wird, **dadurch gekennzeichnet, dass** die Dämpfungsschicht (20) Polyamid und/oder Butylkautschukund/oder Styrol-Butadien-Blockcopolymere (SBS) und/oder Ethylenvinylacetat (EVA) enthält, wobei die genannten Stoffe mindestens 50 Gew.-% der Dämpfungsschicht bilden.

2. Vorrichtung (10) nach Anspruch 1,
**dadurch gekennzeichnet,**
**dass** die Dämpfungsschicht (20) eine größere Dicke aufweist als die Versteifungsschicht (30).

3. Vorrichtung (10) nach Anspruch 1 oder 2,
**dadurch gekennzeichnet,**
**dass** die Dämpfungsschicht (20) und die Versteifungsschicht (30) gemeinsam mindestens 90%, vorzugsweise mindestens 95%, besonders bevorzugt mindestens 98% der Dicke der Vorrichtung (10) bilden.

4. Vorrichtung (10) nach einem der Ansprüche 1 bis 6,
**dadurch gekennzeichnet,**
**dass** die Versteifungsschicht (30) eine Metallfolie und/oder eine Kunststoffschicht und/oder Pappe und/oder eine Bitumenschicht, vorzugsweise mit einer äußeren Abdeckschicht, aufweist.

5. Verbundsystem, aufweisend
- ein zu entdröhnendes Bauteil (40) und
- eine Vorrichtung (10) gemäß einem der Ansprüche 1 bis 4, die mit dem zu entdröhnenden Bauteil (40) fest verbindbar oder verbunden ist.

6. Verfahren zur Entdröhnung eines Bauteils (40) mit den Schritten:
- Anbringen einer Vorrichtung (10) gemäß einem der Anspruche 1 bis 4, welche eine Versteifungsschicht (30) und eine mit der Versteifungsschicht (30) fest verbundene Dämpfungsschicht (20) aus einem geschäumten Schmelzkleber aufweist, an dem zu entdröhnenden Bauteil (40), wobei die Versteifungsschicht (30) steifer ist als die Dämpfungsschicht (20),
und
- Herstellen einer festen Verbindung der Dämpfungsschicht (20) mit dem Bauteil (40) durch Erwärmen und anschließendes Abkühlen zumindest der Dämpfungsschicht der Vorrichtung (10) wobei die Dämpfungsschicht (20) Polyamid und/oder Butylkautschuk und/oder Styrol-Butadien-Blockcopolymere (SBS) und/oder Ethylenvinylacetat (EVA) enthält, wobei die genannten Stoffe mindestens 50 Gew.-% der Dämpfungsschicht bilden.

## Claims

1. Device (10) for deadening the sound of a component (40), comprising
- a damping layer (20) composed of a foamed material and
- a stiffening layer (30) which is fixedly connected to the damping layer (20) and is stiffer than the damping layer (20),
where the damping layer (20) is formed by a foamed hot-melt adhesive,
the damping layer (20) is intended for direct connection to the component (40) whose sound is to be deadened, the foamed hot-melt adhesive being activatable by an increase in temperature so as to generate an adhesive surface for securing the device (10) on the component (40) whose sound is to be deadened, **characterized in that** the damping layer (20) comprises polyamide and/or butyl rubber and/or styrene-butadiene block copolymers (SBS) and/or ethylene-vinyl acetate (EVA), the stated substances forming at least 50% by weight of the damping layer.

2. Device (10) according to Claim 1, **characterized in that** the damping layer (20) has a greater thickness than the stiffening layer (30).

3. Device (10) according to Claim 1 or 2, **characterized in that** the damping layer (20) and the stiffening layer (30) together form at least 90%, preferably at least 95%, more preferably at least 98% of the thickness of the device (10).

4. Device (10) according to any of Claims 1 to 6, **characterized in that** the stiffening layer (30) comprises a metal foil and/or a plastics layer and/or cardboard and/or a bitumen layer, preferably with an outer cover layer.

5. Composite system comprising
- a component (40) whose sound is to be deadened and
- a device (10) according to any of Claims 1 to 4, which is fixedly connected or connectable to the component (40) whose sound is to be deadened.

6. Method for deadening the sound of a component (40), comprising the steps of
- attaching a device (10) according to any of Claims 1 to 4, which comprises a stiffening layer (30) and a damping layer (20) which is composed of a foamed hot-melt adhesive and is fixedly connected to the stiffening layer (30), to the component (40) whose sound is to be deadened, the stiffening layer (30) being stiffer than the damping layer (20), and
- producing a fixed connection of the damping layer (20) to the component (40) by heating and subsequently cooling at least the damping layer of the device (10), where the damping layer (20) comprises polyamide and/or butyl rubber and/or styrene-butadiene block copolymers (SBS) and/or ethylene-vinyl acetate (EVA), the stated substances forming at least 50% by weight of the damping layer.

## Revendications

1. Dispositif (10) pour l'insonorisation d'un composant (40), comprenant :
- une couche d'amortissement (20) en un matériau moussé et
- une couche de renfort (30) reliée solidement avec la couche d'amortissement (20), qui est plus rigide que la couche d'amortissement (20),
la couche d'amortissement (20) étant formée par un adhésif thermofusible moussé,
la couche d'amortissement (20) étant prévue pour être reliée directement avec le composant à insonoriser (40), l'adhésif thermofusible moussé étant activable par une élévation de température, de manière à former une surface adhésive pour la fixation du dispositif (10) sur le composant à insonoriser (40), **caractérisé en ce que** la couche d'amortissement (20) contient du polyamide et/ou un caoutchouc de butyle et/ou des copolymères séquencés de styrène-butadiène (SBS) et/ou de l'éthylène-acétate de vinyle (EVA), les substances mentionnées formant au moins 50 % en poids de la couche d'amortissement.

2. Dispositif (10) selon la revendication 1, **caractérisé en ce que** la couche d'amortissement (20) présente une épaisseur plus grande que la couche de renfort (30).

3. Dispositif (10) selon la revendication 1 ou 2, **caractérisé en ce que** la couche d'amortissement (20) et la couche de renfort (30) forment ensemble au moins 90 %, de préférence au moins 95 %, de manière particulièrement préférée au moins 98 %, de l'épaisseur du dispositif (10).

4. Dispositif (10) selon l'une quelconque des revendications 1 à 6, **caractérisé en ce que** la couche de renfort (30) comprend une feuille métallique et/ou une couche en matière plastique et/ou du carton et/ou une couche de bitume, de préférence avec une couche de recouvrement extérieure.

5. Système composite, comprenant :
- un composant à insonoriser (40) et
- un dispositif (10) selon l'une quelconque des revendications 1 à 4, qui peut être relié ou est relié solidement avec le composant à insonoriser (40).

6. Procédé d'insonorisation d'un composant (40) comprenant les étapes suivantes :
- l'application d'un dispositif (10) selon l'une quelconque des revendications 1 à 4, qui comprend une couche de renfort (30) et une couche d'amortissement (20) en un adhésif thermofusible moussé, reliée solidement avec la couche de renfort (30), sur le composant à insonoriser (40), la couche de renfort (30) étant plus rigide que la couche d'amortissement (20),
et
- la formation d'une liaison solide de la couche d'amortissement (20) avec le composant (40) par chauffage, puis refroidissement d'au moins la couche d'amortissement du dispositif (10), la couche d'amortissement (20) contenant du polyamide et/ou un caoutchouc de butyle et/ou des copolymères séquencés de styrène-butadiène (SBS) et/ou de l'éthylène-acétate de vinyle (EVA), les substances mentionnées formant au moins 50 % en poids de la couche d'amortissement.
